# EUROPÄISCHE PATENTANMELDUNG

(11) **EP 0 953 318 A2**
(43) Veröffentlichungstag der Anmeldung: **03.11.1999**
(21) Anmeldenummer: 99830240.0
(22) Anmeldetag: 23.04.1999
(51) Int. Cl.: A61C 8/00

(54) **Befestigungssystem für Zahnprothesen**

(30) Priorität: 27.04.1998 IT FI980096
(71) Anmelder: Boesmi, Natalino, 57127 Livorno (IT)
(72) Erfinder: Boesmi, Natalino, 57127 Livorno (IT)
(74) Vertreter: Mannucci, Michele

(57) **Zusammenfassung**

Die Befestigung zwischen der Zahnprothese P und dem im Knochen verankerten Implantat (2) umfaßt einerseits eine Aufnahme (10) mit zylindrischem Sitz (10A) und andererseits einen Stecker (18, 12, 14); eine elastische Manschette (22) ist zwischen Stecker und Aufnahme angeordnet, wobei komplementäre ringförmige Rückhalteprofile (10B, 22A) an den Schiebekopplungsflächen vorgesehen sind (Fig. 2).

## Beschreibung

Die Erfindung bezieht sich auf eine Befestigung für traditionelle herausnehmbare Zahnprothesen oder für implantatgestützte Prothesen.

Im Bereich der Implantologie ergibt sich die Notwendigkeit, Zahnprothesen zu realisieren, die vom Patienten herausgenommen werden können, z.B. für die tägliche Hygiene, d.h. Prothesen, die in den jeweiligen Zahnbogen eingesetzt und herausgenommen werden können, in welchem eines oder mehrere, als Pfeiler dienende Implantate vorhanden sind.

Es existieren einige Implantatlösungen, bei denen die Prothese auf den Implantaten mittels Schrauben aufgeschraubt wird, mit dem großen Nachteil, daß regelmäßig ein Eingriff des Zahnarztes für das Entfernen der Prothese erforderlich ist, wobei sich auch für den Zahnarzt die Schwierigkeit ergibt, daß durch das Losschrauben und Herausnehmen des Produktes die Schrauben verschleißen, sich verklemmen und deformieren können.

Andere bekannte Lösungen besitzen eine Kunststoffkappe, über die die Kaukräfte auf eine metallische Stütze, meistens von sphärischer Form, abgeleitet werden. Hier konzentrieren sich alle Beanspruchungen, so daß die Kappe sehr rasch ermüdet und ihre Elastizität und damit die Eignung zum Stabilisieren der Prothese im Zahnbogen verliert.

Bei einer anderen bekannten Lösung sind Riegel oder Klinken vorgesehen, welche empfindliche und nicht immer praktische Mechanismen darstellen, da sie außerordentlich steif sind.

Aufgabe der Erfindung ist eine spezielle Befestigung, mit der die Komponenten direkt auf der Fixtur oder in jedem beliebigen Punkt einer Mesio-Struktur angebracht werden können, und die die bei vielen Typen von Prothesen auftretenden Probleme löst, wie aus der nachfolgenden Beschreibung hervorgeht.

Die Erfindung sieht ein Befestigungssystem vor - zwischen einer Zahnprothese und dem im Knochen verankerten Implantat
- das dadurch gekennzeichnet ist, daß sie umfaßt: einerseits eine Aufnahme mit einem zylindrischen Sitz; andererseits einen Stecker; sowie eine elastische Manschette, die zwischen Stecker und Aufnahme eingesetzt wird, wobei komplementäre ringförmige Rückhalteprofile in den gegenseitigen Schiebekopplungsflächen vorgesehen sind.

Bei einer bevorzugten Lösung ist der Stecker an der Prothese befestigt, und auf ihn ist die elastische Manschette aufgezogen, während die Aufnahme an dem im Knochen verankerten Implantat befestigt ist.

Die elastische Manschette umgibt einen zylindrischen Zapfen des Steckers und ist mittels einer Schraube befestigt, die axial in den Zapfen eingeschraubt ist und die mit ihrem Flachkopf auf die Manschette in Axialrichtung eine Kraft ausübt. Die Aufnahme kann eine ringförmige Rückhaltenut aufweisen, und dementsprechend weist die elastische Manschette einen ringförmigen Rückhaltevorsprung auf. Der Rückhalteeffekt kann reguliert werden, indem die elastische Manschette in Axialrichtung mehr oder weniger komprimiert wird.

Die von einem rohrförmigen Element gebildete Aufnahme kann mit der am Implantat vorgesehenen zylindrischen Komponente verbunden sein.

Der Stecker der Befestigung besitzt vorteilhafterweise einen mit Gewinde versehenen Stiel, der in eine in der Prothese inkorporierte Hülse einschraubbar bzw. herausschraubbar ist. Bei einer anderen möglichen Lösung kann die Befestigung umgekehrt sein, wobei die elastische Manschette in der in der Prothese vorgesehenen Aufnahme gehalten ist, während der Stecker an den im Knochen verankerten Implantat vorgesehen ist. In diesen Fällen ist es die Hülse des Steckers, die mit der entsprechend geformten zylindrischen Komponente gekoppelt wird.

Zum besseren Verständnis der Erfindung wird eine praktische, nicht beschränkende Ausführungsform der Erfindung anhand der Zeichnung näher erläutert. Es zeigt:
Fig. 1 im Schnitt ein Beispiel einer Prothese mit mittleren Implantaten;
Fig. 2 einen Querschnitt nach der Linie II-II von Fig. 1, in größerem Maßstab;
Fig. 3 und 4 die an der Prothese bzw. am Implantat vorgesehenen Komponenten;
Fig. 5 und 6 analog zu Fig. 2 in Explosionsdarstellung eine Variante, bei der der Stecker und die Aufnahme vertauscht sind.

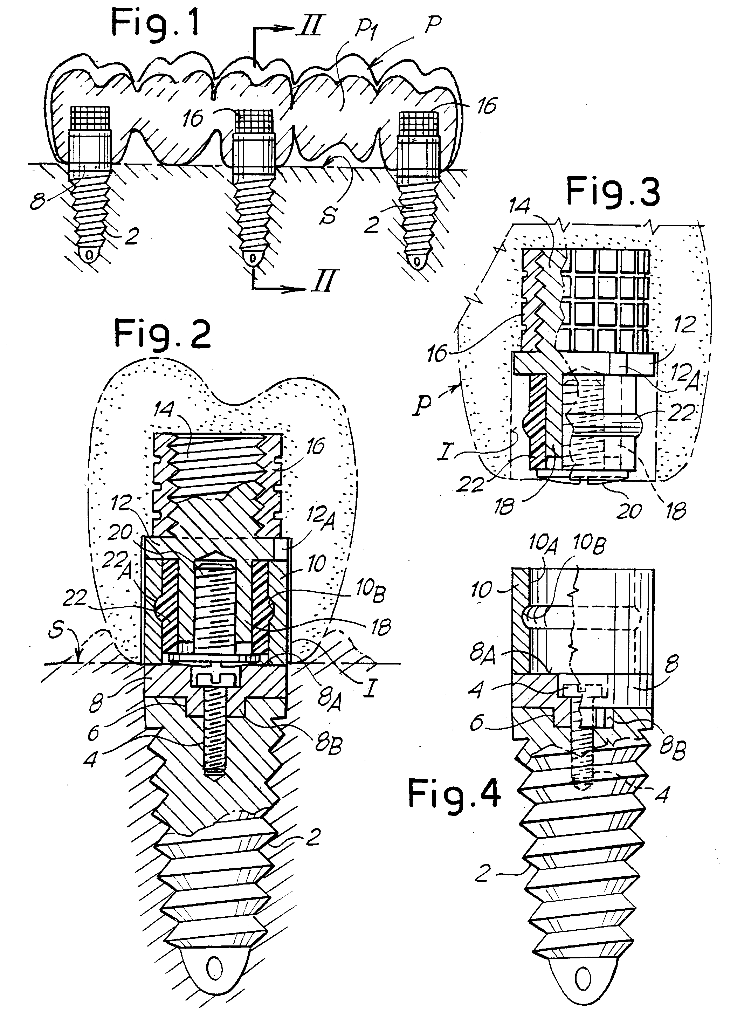

In den Fig. 1 bis 4 ist summarisch mit S die Knochenstruktur und mit P die gesamte Prothese bezeichnet.

In dem Knochen S sind eine oder mehrere Implantate 2 eingesetzt.

Jedes dieser Implantate 2 umfaßt eine Komponente 8, die mittels der Schraube 4 an dem eigentlichen Implantat befestigt sein kann, mit einem Vorsprung 8B, der in einem Sitz 6 des Teils 2 aufgenommen ist, um Drehbewegungen der zylindrischen Komponente 8 zu verhindern. Die oberen Flächen 8A der Komponenten 8 werden anschließend mit einer Fräse derart planbearbeitet, daß alle Oberflächen 8A in der gleichen Ebene liegen. Hierdurch werden die eventuellen Axialfluchtungsfehler der Implantate eliminiert. Auf jeder dieser Oberflächen 8A muß die rohrförmige Aufnahme 10 montiert werden. Es werden somit die zylindrischen Komponenten 8 abmontiert und es erfolgt dann das Aufschweißen der jeweiligen Aufnahme 10, vorzugsweise durch Angießen, d.h. direktes Anformen in geschmolzenem Zustand.

Anschließend werden mittels der Schrauben 4 die Verbundteile 18 wieder auf den Implantaten 2 befestigt, wobei sich eine zueinander parallele Ausrichtung der Innensitze 10A der Aufnahme 10 ergibt. Der Sitz 10A jeder rohrförmigen Aufnahme 10 hat eine Ringnut 10B, die eine Rückhaltefunktion für die Prothese hat.

Auch bei den Zapfen der Prothesen geht man so vor, daß sich eine perfekte Parallelität ergibt.

Jeder der Stecker der Befestigung, der isoliert in Fig. 3 dargestellt und an der Prothese P befestigt ist, hat in der Mitte eine scheibenförmige Erweiterung 12, von der sich nach oben (in der Zeichnung) ein Gewindestift 14 erstreckt, der in eine Hülse (16) eingeschraubt werden kann, die an der Prothese (B) eingebettet oder verankert ist; somit ist der Stecker an der Prothese B lösbar befestigt und mittels Abflachungen 12A in der Erweiterung 12 kann mit einem geeigneten Schraubschlüssel das Festschrauben oder Losschrauben des Gewindezapfens 14 in bzw. aus der Hülse 16 erfolgen. Der Stecker weist ferner unterhalb (in der Zeichnung) der scheibenförmigen Erweiterung 12 einen zylindrischen Zapfen 18 auf, der eine axiale Gewindebohrung für eine Schraube 20 mit breitem Flachkopf aufweist; auf den zylindrischen Zapfen 18P wird eine elastische rohrförmige Manschette 22 aufgezogen, die vom Kopf der Schraube 20 in Axialrichtung zusammengedrückt und festgehalten wird, so daß diese Manschette 2 leicht auswechselbar ist und in Axialrichtung mehr oder weniger komprimiert werden kann. Die Manschette 22 hat einen ringförmigen Rückhaltevorsprung 22A, der dazu bestimmt ist, mit der Nut 10B der Aufnahme 10 zusammenzuwirken.

Die Prothese P hat eine Tragstruktur oder Primärbrücke, die in der Prothese eingelagert ist und in der die Hülse oder Hülsen 16 eingebettet ist bzw. sind. Die Prothese P wird erzeugt, nachdem die Aufnahme 10 auf die Manschette 22 aufgeschoben ist und wobei vorübergehend rund um die Aufnahme 10 ein kleines Übermaß belassen wird; dadurch bildet die auf die Steckerstruktur montierte Prothese relativ zur Aufnahme 10 einen sehr kleinen Spalt I (Fig. 2), der begrenzte Korrekturbewegungen zwischen dem Stecker (bestehend aus den Teilen 20, 22) und der Aufnahme 10 zuläßt, aufgrund der elastischen Nachgiebigkeit der Manschette 22.

Die Manschette 22 kann mittels der Schraube 20 in Axialrichtung mehr oder weniger zusammengedrückt werden, wodurch die Kopplungsverhältnisse zwischen Hülse 22 und Aufnahme 10 und auch der gesamte Rückhalteeffekt zwischen der Ringnut 10B und den Ringvorsprung 22A variiert werden können. Die aufgerauhte Oberfläche des Flachkopfes der Schraube 20 verhindert deren spontanes Lockerwerden.

Mit dieser Anordnung kann die Prothese P bequem aufgesetzt und abgenommen werden, indem die Stecker mit den elastischen Manschetten 22 in die Aufnahmen 10 eingesteckt bzw. aus ihnen herausgezogen werden können, ohne daß hierfür die Betätigung von Schrauben od. dgl. (d.h. ein zahnärztlicher Eingriff) erforderlich ist. Die Auswechslung einer elastischen Manschette 22 (um den Rückhalteeffekt zu variieren) ist außerordentlich einfach durch Losschrauben der Schraube 20 möglich. Die Manschette 22 kann durch den Kopf der Schraube mehr oder weniger komprimiert werden.

Die Einfügung der Manschette oder Manschetten 22 zwischen dem Stecker 18, 12, 14 und der Aufnahme 10, 8, der oder jeder Befestigung der Prothese an der Knochenstruktur S schafft die Möglichkeit von begrenzten Ausweich- und Ju-stierbewegungen, die sehr erwünscht sind, zwischen der Prothese und ihren Befestigungen. Der Stecker 18, 12, 14 ist für jegliche Eventualität leicht von der Prothese losschraubbar, dank des Vorhandenseins der Hülse 16. Auch die Aufnahme 10, 8 kann von dem Implantat 2 entfernt werden.

Aus der obigen Beschreibung erkennt man leicht die folgenden, teilweise bereits angedeuteten Vorteile der Erfindung:
A. Man erhält eine Passivfunktion auf den Implantaten, die sich automatisch ergibt durch die elastische Manschette oder Manschetten 22. Die Anordnung ermöglicht eine sehr weitgehende Annäherung an die Gewebeverbindung, die in natura zwischen Alveole und Zahn existiert; obwohl im allgemeinen das Abwechseln von natürlichen Zähnen und Implantaten kontraindiziert ist, da bekanntlich das Implantat starr ist, während natürliche Zähne eine gewisse Beweglichkeit haben, ist dies mit der erfindungsgemäßen Befestigung möglich, da auch diese Befestigung in vorteilhafter Weise eine deutliche elastische Beweglichkeit hat, die einen natürlichen Zahn nachahmt.
B. Das Auswechseln der Manschette 22 ist äußerst leicht, und zwar durch Losschrauben der Schraube 20, die im Kontaktbereich mit der Manschette 22 aufgerauht ist.
C. Der gesamte Stecker 14, 12, 18 ist auswechselbar, da er mittels eines geeigneten Schraubschlüssels von der in der Prothese P eingebettenen Hülse 16 losgeschraubt werden kann.
D. Es ist möglich, die Prothese in einer einzigen, einteiligen Struktur herzustellen, die die Zähne trägt.
E. Es ist möglich, einen Leerraum I vorzusehen, um eine automatische Nachgiebigkeit zu ermöglichen. Diesen Leerraum erhält man, indem man die Aufnahme 10 mit einem leichten Dickenübermaß herstellt, welches nach der Formung der Prothese weggenommen wird.
F. Die Prothese kann abgenommen werden, ohne daß ein Zahnarzt Schrauben lösen muß und ohne daß Schrauben oder Innengewinde beschädigt werden.
G. Es ist eine Zahnfleischmodellierung vom Typ der Festprothese möglich, mit optimaler Ästhetik, und es können Prothesen mit erheblichen Vorteilen hinsichtlich der Funktion, der Ästhetik, der Kosten und der Einfachheit der Konstruktion konstruiert werden.
H. Es ist möglich, daß Teil 8 der Aufnahme 10 ohne Schweißen, nämlich einfach durch Gießanformen, zu befestigen.
I. Die Hülse oder Hülsen 16 können im Kunststoff der Prothese mit geeigneten Verankerungsmitteln eingebettet werden.
J. Es ist einfach, eine gemeinsame Stützebene für die am Knochen verankerten Komponenten auszubilden, für die Parallelität der Kupplungsflächen von Stecker und Aufnahme.
K. Ein Implantat kann an jedem beliebigen Punkt einer Mesio-Struktur eingefügt werden.
L. Die Erfindung ist anwendbar bei praktisch allen Typen von Implantaten, da am Implantat selbst kein Eingriff erforderlich ist, sondern nur an Zusatzteilen außerhalb des eigentlichen Implantats.

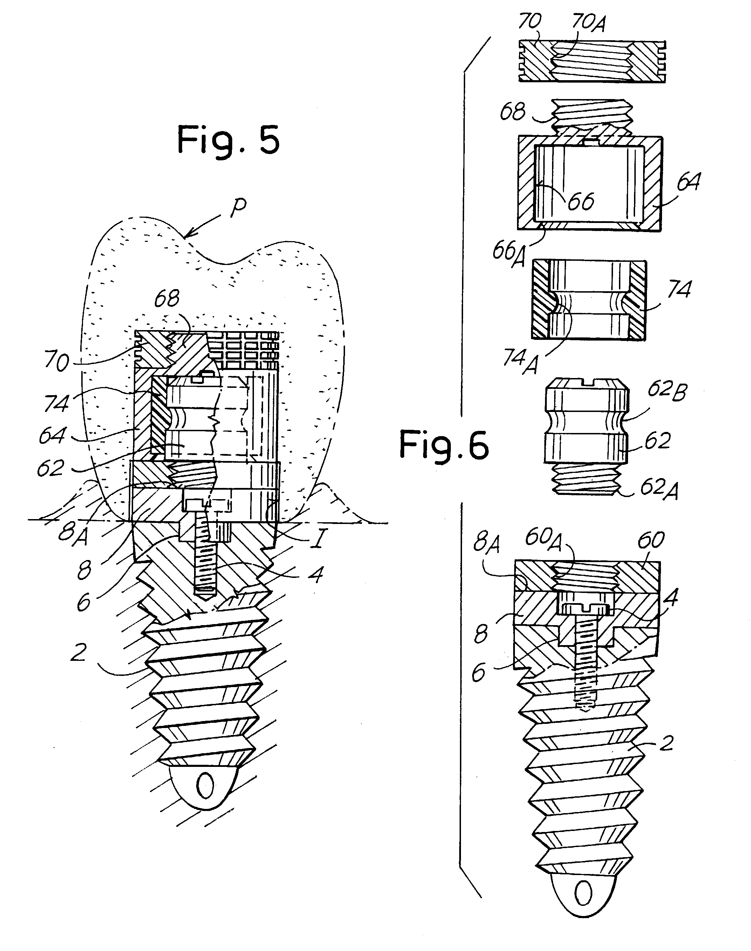

Fig. 5 und 6 zeigen eine gegenüber Fig. 1 bis 4 geänderte Ausführungsform, bei der die Position von Stecker und Aufnahme vertauscht wurde.

Bei dieser Ausführungsform ist ein Teil 60 durch Schweißen an der Komponente 8 anbringbar, die bereits beschrieben wurde und die mittels der Schraube 34 am Teil 2 des Implantats befestigbar ist. Dieses Teil 60 hat ein Innengewinde 60A, in das ein Gewindezapfen 62A des Steckers 62 einschraubbar ist, der somit auswechselbar ist. Der Stecker 62 hat eine Ringnut 62B, die der Ringnut 10B des ersten Ausführungsbeispiels entspricht. Mit 64 ist ein Element bezeichnet, das eine Ausnehmung 66 aufweist, die die Aufnahme bildet mit einem leichten Rückhalterand 66A. Das Element 64 hat einen axialen Stiel 68 mit Gewinde, mit dem dieses Element in einer Gewindebohrung 70A einer Hülse 70 eingeschraubt und befestigt werden kann, die in der Prothese P eingebettet ist. In der Ausnehmung 60 ist eine rohrförmige elastische Manschette 74 aufgenommen, die von dem Rand 66A festgehalten wird und die einen ringförmigen Innenvorsprung 74A aufweist. Nach dem Einsetzen der Manschette 74 in die Ausnehmung 66 des Elements 64 (welches an der Prothese befestigt ist), wird die Manschette 64 auf den Stecker 62 aufgeschoben und bewirkt mit ihrem Vorsprung 74A die Rückhaltung in der Nut 60B, wobei die elastische Nachgiebigkeit wie bei der Manschette 22 des folgenden Ausführungsbeispiels erhalten wird, mit den entsprechenden Vorteilen.

Die Zeichnungen stellen nur ein Ausführungsbeispiel zur praktischen Erläuterung der Erfindung dar, wobei die Erfindung im Rahmen des ihr zugrunde liegenden Erfindungsprinzips in Form und Anordnung variieren kann. Die Bezugszeichen in den Ansprüchen dienen dem leichteren Verständnis der Ansprüche unter Bezugsnahme auf die Beschreibung und die Zeichnungen und beschränken den Schutzbereich der Ansprüche nicht.

## Patentansprüche

1. Befestigungssystem zwischen einer Zahnprothese und einem im Knochen verankerten Implantat,
dadurch **gekennzeichnet**, daß sie umfaßt: einerseits eine Aufnahme (10, 64) mit zylindrischem Sitz (10A, 66); andererseits einen Stecker (18, 12, 14; 62); sowie eine elastische Manschette (22, 64), die zwischen Stekker und Aufnahme angeordnet ist, wobei komplementäre Rückhalteprofile (10B, 22A, 22B, 74A) zwischen den gegenseitigen Schiebekopplungsflächen vorgesehen sind.

2. Befestigungssystem nach Anspruch 1,
dadurch **gekennzeichnet,** daß der Stecker (18, 12, 14) an der Prothese (P) vorgesehen und auf ihm die elastische Manschette (22) aufgesetzt ist, wobei die Aufnahme (10) an dem im Knoten verankerten Implantat vorgesehen ist.

3. System nach Anspruch 3,
dadurch **gekennzeichnet**, daß die Manschette (22) einen zylindrischen Kopf (18) des Steckers (18, 12; 14) umgibt und von einer Schraube (20) gehalten ist, die axial auf den Zapfen (18) aufgeschraubt ist und mit ihrem Flachkopf eine Axialkraft auf die Manschette ausübt.

4. System nach mindestens einem der Ansprüche 1 bis 3,
dadurch **gekennzeichnet**, daß die Aufnahme (10) eine ringförmige Rückhaltenut (10B) aufweist und daß die elastische Manschette (22) einen entsprechenden ringförmigen Rückhaltevorsprung (22A) aufweist.

5. System nach mindestens einem der vorangehenden Ansprüche,
dadurch **gekennzeichnet**, daß die Aufnahme von einem rohrförmigen Element (10) gebildet ist, das insbesondere durch Gießanformung an einer Komponente (8) befestigt ist, die ihrerseits mit einer Schraube (4) an dem Teil (2) befestigt ist, der stabil mittels Gewinde in die Knochenstruktur hineinragt.

6. System nach Anspruch 1,
dadurch **gekennzeichnet**, daß der Stecker (62) - vorzugsweise mit einer Schraube (62) - am Implantat (2, 60) befestigt ist und daß die Aufnahme (64, 66) an der Prothese befestigt ist.

7. System nach Anspruch 6,
dadurch **gekennzeichnet**, daß die elastische Manschette (74) in der Aufnahme (64, 66) durch einen Rand (66A) festgehalten wird.

8. System nach Anspruch 6 oder 7,
dadurch **gekennzeichnet**, daß der Stecker (62) eine Ringnut (62B) und die Manschette (64) einen entsprechenden ringförmigen Innenvorsprung (74A) aufweist, um einen Halteeffekt zu bewirken.

9. Befestigung nach mindestens einem der Ansprüche 1 bis 6 und 8,
dadurch **gekennzeichnet**, daß der Stecker (62) und/oder die Aufnahme (64) von dem Implantat bzw. der Prothese abschraubbar und abnehmbar sind.

10. System nach mindestens einem der vorangehenden Ansprüche,
dadurch **gekennzeichnet**, daß die mit der Prothese (P) verbundenen Befestigungskomponenten einen Gewindezapfen (68) aufweisen, der in eine in der Prothese eingebettete Hülse (16, 70) einschraubbar bzw. aus ihr herausschraubbar ist.

11. Befestigungssystem für Dentalprothesen wie oben beschrieben und in der Zeichnung beispielsweise dargestellt.
